# EUROPEAN PATENT APPLICATION

(11) **EP 4 075 584 A1**
(43) Date of publication of application: **19.10.2022**
(21) Application number: 21916633.7
(22) Date of filing: 09.02.2021
(51) Int. Cl.: H01M 50/30, H01M 50/14, H01M 10/04

(54) **BATTERY CELL, BATTERY, ELECTRICAL DEVICE, AND METHOD FOR MANUFACTURING BATTERY CELL**

(71) Applicant: Contemporary Amperex Technology Co., Limited, Fujian 352100 (CN)
(72) Inventor: CHAI, Zhisheng, Ningde Fujian 352100 (CN); WANG, Lei, Ningde Fujian 352100 (CN); ZHU, Linlin, Ningde Fujian 352100 (CN); FANG, Kun, Ningde Fujian 352100 (CN); SUN, Dongsheng, Ningde Fujian 352100 (CN)
(74) Representative: Holt, Lucy Rose
(86) International application number: PCT/CN2021/076282
(87) International publication number: WO 2022/170487

(57) **Abstract**

The embodiments of the present application provide a battery cell, which includes a casing provided with openings at two ends in a first direction; a first end cap and a second end cap for closing the openings at the two ends of the casing, respectively and both connected with the casing; a connecting piece disposed in the casing, for connecting the first end cap or for connecting the first end cap and the second end cap, the battery cell is provided with weak structures at the two ends in the first direction, a connecting force between the connecting piece and the first end cap is greater than a connecting force between the connecting piece and the second end cap, and a connecting position where the connecting piece is connected to the first end cap is located in an area surrounded by the weak structures. According to the technical solution of the present application, by setting the connecting forces between the connecting piece and the first end cap as well as the second end cap to be different, a pressure relief channel or an opening is more easily formed on a weak structure on a side of the second end cap. Thus, a pressure relief direction can be controlled without distinguishing incoming materials during manufacturing when component members of the battery cell have the same structure, thereby improving the production efficiency and reducing the production cost.

## Description

### TECHNICAL FIELD

Embodiments of the present application relate to the field of batteries, and more particularly to a battery cell, a battery, an electrical device and a method for preparing the battery cell.

### BACKGROUND

With the deepening of energy saving and pollution reduction, batteries are widely used in automobiles and other fields. For the batteries, besides performance parameters, safety is also a problem that cannot be ignored.

An existing battery cell is generally provided with a weak structure as a pressure relief mechanism. When the temperature or pressure inside the battery cell reaches a threshold, the weak structure breaks to form an opening or a channel through which the gas pressure and temperature are released, thereby avoiding the explosion of the battery cell.

In order to control the pressure relief direction of the battery cell, it is necessary to provide a weak structure at a specific position of the battery cell, such as providing the weak structure on only one end cap of a pair of end caps of the battery cell. As adjacent battery cells in a system need to adopt a series structure, in order to control the irrelative pressure relief of the adjacent battery cells, the weak structures of the two adjacent battery cells are arranged on different positive and negative end caps, resulting in different positive and negative end caps of the two adjacent battery cells, increasing material cost and needing to distinguish incoming materials during manufacturing, thereby affecting production and manufacturing efficiency.

### SUMMARY

The present invention provides a battery cell, a battery, an electrical device and a method for preparing the battery cell, which enables control of a pressure relief direction without distinguishing incoming materials of component members of the battery cell.

In the first aspect, a battery cell is provided, which includes a casing provided with openings at two ends in a first direction; a first end cap and a second end cap for closing the openings at the two ends of the casing, respectively and both connected with the casing; a connecting piece disposed in the casing, for connecting the first end cap or for connecting the first end cap and the second end cap, wherein the battery cell is provided with weak structures at the two ends in the first direction, a connecting force between the connecting piece and the first end cap is greater than a connecting force between the connecting piece and the second end cap, and a connecting position where the connecting piece is connected to the first end cap is located in an area surrounded by the weak structures.

According to the technical solution of the embodiments of the application, the connecting force between the connecting piece and the first end cap is set to be greater than the connecting force between the connecting piece and the second end cap, so that a pressure relief channel or an opening is more easily formed on a weak structure on a side of the second end cap. Therefore, a pressure relief direction can be controlled without distinguishing incoming materials during manufacturing when component members of the battery cell have the same structure, thereby improving the production efficiency and reducing the production cost.

In some embodiments, a connection mode of the connecting piece to the first end cap is different from a connection mode of the connecting piece to the second end cap.

In some embodiments, the connecting piece is in threaded connection or bonded or snap-fitted with the first end cap, and the connecting piece is in interference fit with the second end cap. Therefore, the purpose of setting the connecting force between the connecting piece and the first end cap to be different from the connecting force between the connecting piece and the second end cap can be achieved by setting the connection mode between the connecting piece and the first end cap to be different from the connection mode between the connecting piece and the second end cap.

In some embodiments, the connecting piece is connected with the first end cap, and the connecting piece is not connected with the second end cap. Therefore, there is no connecting force between the connecting piece and the second end cap, and it is easier to form the pressure relief channel or the opening on the side of the second end cap.

In some embodiments, a length of the connecting piece is less than a minimum distance between the first end cap and the second end cap such that the connecting piece is not connected or in contact with the second end cap. Thus, it is not necessary to distinguish structures of two ends of the connecting piece, and the connecting piece can be connected only with the first end cap by reducing a size of the connecting piece, thereby further improving the production efficiency and reducing the production and manufacturing cost. In addition, assembly errors can be avoided structurally.

In some embodiments, the battery cell further includes an electrode assembly received in the casing, and at least part of the connecting piece is received in the electrode assembly, the connecting piece extending out of the electrode assembly in the first direction toward the first end cap to connect with the first end cap. In some embodiments, a surface, facing the connecting piece, of the first end cap is formed with a receiving portion for receiving at least a part of the connecting piece extending out of the electrode assembly, and the receiving portion being in threaded connection or snap-fitted with the part of the connecting piece extending out of the electrode assembly. Therefore, the connecting piece provides a connecting force to the first end cap by means of screw connection, snap-fitting and the like.

In some embodiments, a structure of the first end cap is the same as a structure of the second end cap.

In some embodiments, a part of the connecting piece in contact with the first end cap and/or the second end cap is made of an insulating material. Therefore, it is possible to avoid short circuit of positive and negative electrodes of the battery cell caused by the connecting piece.

In some embodiments, the battery cell further includes an electrode assembly received in the casing, a receiving hole is formed in a center of the electrode assembly, and the connecting piece is disposed in the receiving hole. In some embodiments, the battery cell further includes an electrode assembly received in the casing, and the connecting piece is fixedly connected with the electrode assembly to limit displacement of the connecting piece in the first direction. In some embodiments, the connecting piece is in interference fit with the electrode assembly. Thereby, the connecting piece provides a connecting force to the first end cap and/or the second end cap through a fixed connection with the electrode assembly.

In some embodiments, the weak structures are provided at the first end cap and the second end cap, or at a connecting portion where the casing is connected to the first end cap and a connecting portion where the casing is connected to the second end cap. In some embodiments, when the weak structures are provided at the connecting portion where the casing is connected to the first end cap and the connecting portion where the casing is connected to the second end cap, the connecting portions are C-shape and are arranged at the two ends of the casing in the first direction, and the C-shaped connecting portions at the two ends of the casing clamp the first end cap and the second end cap, respectively. The weak structures with this configuration can be fitted with the connecting piece, so that the weak structure on the side with small connecting force can more easily form the pressure relief channel or the opening, thereby achieving the purpose of controlling the pressure relief direction.

In the second aspect, there is provided a battery including a plurality of battery cells of the first aspect.

In the third aspect, there is provided an electrical device including the battery of the second aspect.

In the fourth aspect, there is provided a method for preparing a battery cell, which includes providing a casing provided with openings at two ends in a first direction; providing a first end cap and a second end cap for closing the openings at the two ends of the casing, respectively and both connected with the casing; and providing a connecting piece disposed in the casing, for connecting the first end cap or for connecting the first end cap and the second end cap, wherein the battery cell is provided with weak structures at the two ends in the first direction, a connecting force between the connecting piece and the first end cap is greater than a connecting force between the connecting piece and the second end cap, and a connecting position where the connecting piece is connected to the first end cap is located in an area surrounded by the weak structures.

### BRIEF DESCRIPTION OF DRAWINGS

The accompanying drawings, which are illustrated herein, serve to provide a further understanding for the present application and form a part of the present application, and the exemplary embodiments of the present application as well as the illustrations thereof serve to explain the present invention and do not constitute an undue limitation of the present application. In the accompanying drawings:
FIG. 1 is a schematic diagram of a vehicle according to some embodiments of the present application;
FIG. 2 is a schematic structural diagram of a battery according to some embodiments of the present application;
FIG. 3 is an exploded diagram of a battery cell according to some embodiments of the present application;
FIG. 4 is a schematic diagram of the battery cell according to some embodiments of the present application;
FIG. 5 is a sectional view of the battery cell according to some embodiments of the present application;
FIG. 6 is a front view of a weak structure of the battery cell according to some embodiment of the present application;
FIG. 7 is a front view of the weak structure of the battery cell according to some embodiment of the present application;
FIG. 8 is a sectional view of the weak structure of the battery cell according to some embodiments of the present application;
FIG. 9 is a sectional view of the weak structure of the battery cell according to some embodiments of the present application;
FIG. 10 is a schematic diagram of the battery cell according to some embodiments of the present application;
FIG. 11 is a schematic structural diagram of snap-fitting of a connecting piece and an end cap of the battery cell according to some embodiments of the present application; and
FIG. 12 is a schematic flowchart of a method for preparing a battery cell according to some embodiments of the present application

### DETAILED DESCRIPTION OF EMBODIMENTS

In order to make objectives, technical solutions, and advantages of the embodiments of the present application clearer, the technical solutions in the embodiments of the present application are described clearly in the following with reference to accompanying drawings in the embodiments of the present application. Apparently, the described embodiments are only portion rather than all of the embodiments of the present application. Based on the embodiments of the present application, all other embodiments obtained by those ordinarily skilled in the art without exerting creative effort fall within the scope of protection of the present application.

Unless otherwise defined, all technical and scientific terms used herein have the same meanings as are commonly understood by those skilled in the art of the present application. Terms used herein in the description of the present application are for the purpose of describing specific embodiments only and are not intended to limit the present application. The terms "including" and "having" and any variations thereof in the description and claims of the present application and the above description of the drawings are intended to cover non-exclusive inclusion. It needs to be noted that the terms "first", "second" and the like in the description and claims as well or the above drawings of the present application are used to distinguish similar objects rather than describe a specific order or sequence.

"Embodiments" referred to in the present application means that a particular feature, structure, or characteristic described in connection with embodiments may be included in at least one embodiment of the present application. The presence of the phrase in various places in the description does not necessarily mean the same embodiment, nor is it a separate or alternative embodiment that is mutually exclusive with other embodiments. It is explicitly and implicitly understood by those skilled in the art that the embodiments described herein may be combined with other embodiments.

In the description of the present application, it needs to be noted that, unless otherwise expressly specified and limited, the terms "install", "connect", "couple", "attach" need to be understood in a broad sense, for example, it may be fixed connection, detachable connection or integral connection; it may be direct connection or indirect connection by means of an intermediate medium, or may be the internal communication of two elements. For those ordinarily skilled in the art, the specific meanings of the above terms in the present application may be understood according to the specific circumstances.

The term "and/or" in the present application is simply a description of the association relationship of the associated objects, indicating that three relationships can exist, for example, A and/or B may indicate that A exists alone, A and B exist at the same time, and B exists alone. In addition, the character "/" in the present application generally means that the associated objects are in an "or" relationship.

As used in the present application, "multiple" refers to more than two (including two). Likewise, "multiple groups" refers to more than two (including two) groups, and "multiple pieces" refers to more than two (including two) pieces.

In the present application, the battery cell may include a lithium-ion secondary battery, a lithium-ion primary battery, a lithium-sulfur battery, a sodium-lithium-ion battery, a sodium-ion battery, a magnesium-ion battery, and the like, and the concept of the present application will be described mainly with the lithium-ion battery as an example below. It needs to be understood that any other suitable type of rechargeable battery is applicable. The battery cells may be cylindrical, flat, cuboid or other shapes, which are not limited in the embodiments of the present application. Battery cells are generally divided into three types according to the packaging mode: cylindrical battery cells, rectangular battery cells and pouch battery cells, which are not limited in the embodiments of the present application either.

Lithium ion battery cells work mainly depending on movement of lithium ions between a positive plate and a negative plate. The positive plate includes a positive current collector and a positive active material layer. The positive active material layer is coated on a surface of the positive current collector. The positive current collector not coated with the positive active material layer protrudes from the positive current collector coated with the positive active material layer. The positive current collector not coated with the positive active material layer serves as a positive tab. A material of the positive current collector may be aluminum, and the positive active material may be lithium cobaltate, ferrous lithium phosphate, ternary lithium or lithium manganate, etc. The negative plate includes a negative current collector and a negative active material layer. The negative active material layer is coated on a surface of the negative current collector, the negative current collector not coated with the negative active material layer protrudes from the negative current collector coated with the negative active material layer, and the negative current collector not coated with the negative active material layer serves as a negative tab. A material of the negative current collector may be copper, and the negative active material may be carbon or silicon. In order to ensure that a large current is passed without fusing, a plurality of positive tabs are provided and stacked together, and a plurality of negative tabs are provided and stacked together. The tabs are connected to a positive electrode terminal and a negative electrode terminal of the battery cell by an adapter member or directly. A separator is provided between the positive plate and the negative plate to form a thin film structure having a three-layer material. The thin film structure is generally wound or stacked to form an electrode assembly with a desired shape.

In the development of battery technology, many design factors need to be considered at the same time, such as energy density, cycle life, discharge capacity, charge-discharge rate and other performance parameters. In addition, the safety of batteries also needs to be considered.

For battery cells, the main safety hazards come from the charging and discharging processes, as well as the appropriate ambient temperature design. In order to effectively avoid unnecessary losses, there are generally at least triple protection measures for battery cells. Specifically, the protection measures include at least switching elements, selection of appropriate separator materials and pressure relief mechanisms. The switching element refers to an element that can stop charging or discharging the battery when a temperature or resistance in the battery cell reaches a certain threshold. The separator is used to isolate the positive plate and the negative plate, and can automatically dissolve the micron (even nanometer) micropores attached to it when the temperature rises to a certain value, so that metal ions cannot pass through the separator and internal reaction of the battery cell is terminated.

The pressure relief mechanism refers to an element or component that is actuated when the internal pressure or temperature of the battery cell reaches a predetermined threshold to relieve the internal pressure or temperature. Threshold design varies according to different design requirements. The threshold may depend on the material of one or more of the positive plate, the negative plate, the electrolyte and the separator in the battery cell. The pressure relief mechanism may be in a form of an explosion-proof valve, an air valve, a pressure relief valve or a safety valve, and may specifically adopt a pressure-sensitive or temperature-sensitive element structure. That is, when the internal pressure or temperature of the battery cell reaches a predetermined threshold, the pressure relief mechanism executes an action or a weak structure provided in the pressure relief mechanism is destroyed, thereby forming an opening or a channel for internal pressure or temperature relief, and high-temperature and high-pressure substances in the battery cell will be discharged outward as emissions from the formed opening or channel. In this way, the pressure and temperature of the battery cell can be relieved under the condition of controllable pressure or temperature, thereby avoiding the occurrence of potentially more serious accidents.

Emissions from battery cells mentioned in the present application include, but are not limited to, electrolytes, dissolved or split positive and negative plates, fragments of separators, high-temperature and high-pressure gases generated by reactions, flames, and the like.

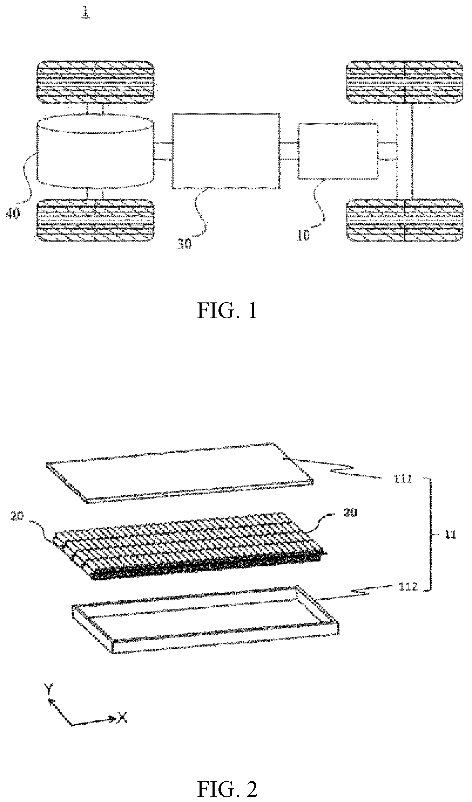

In a battery containing a plurality of battery cells, separators are usually arranged between adjacent battery cells, in order to avoid the high-temperature and high-pressure emissions being discharged to other adjacent battery cells and cause the failure of other adjacent battery cells during pressure relief of the battery cells. However, when there are no other components between adjacent battery cells (refer to FIG. 2) or only bus components, it is necessary to control the pressure relief direction of the battery cells so that the discharged materials are as far away from other adjacent battery cells as possible. For this reason, the weak structure is usually only provided at a specific position of the battery cell, for example, only one end cap of the battery cell is provided with the weak structure. As adjacent battery cells in a system need to adopt a series structure, in order to control the irrelative pressure relief of the adjacent battery cells, the weak structures of the two adjacent battery cells are arranged on different positive and negative end caps, resulting in different positive and negative end caps of the two adjacent battery cells, increasing material cost and needing to distinguish incoming materials during manufacturing, thereby affecting production and manufacturing efficiency. In view of this, the present application provides a technical solution, in which the pressure relief direction of the battery cell can be controlled without distinguishing the incoming materials of the battery cell components during manufacturing by setting the connection forces between the connecting piece and a pair of end caps to be different.

Hereinafter, the implementation of the present invention will be described in detail with reference to the accompanying drawings. It needs to be understood that the technical solution described in the embodiments of the present application is not only applicable to the devices described above, but also to all devices using batteries. However, for the sake of conciseness of description, the following embodiments are illustrated with electric vehicles as examples.

FIG. 1 is a structural schematic diagram of a vehicle 1 according to an embodiment of the present application. The vehicle 1 may be a fuel vehicle, a gas vehicle or a new energy vehicle, and the new energy vehicle may be a pure electric vehicle, a hybrid vehicle or an extended-range vehicle. A motor 40, a controller 30 and a battery 10 may be provided inside the vehicle 1. The controller 30 controls the battery 10 to supply power to the motor 40. For example, the battery 10 may be provided at a bottom of the vehicle 1 or at front or rear of the vehicle 1. The battery 10 may be used for supplying power to the vehicle 1. For example, the battery 10 may be used as an operational power supply of the vehicle 1, for circuitry of the vehicle 1, for example, for the operational power demand during startup, navigation and running of the vehicle 1. In another embodiment of the present application, the battery 10 may be used not only as an operational power supply of the vehicle 1, but also as a driving power supply of the vehicle 1, providing driving power for the vehicle 1 instead or in part instead of fuel oil or natural gas.

In order to meet different power requirements, the battery may include a plurality of battery cells wherein the plurality of battery cells may be connected in series or in parallel or in parallel-series connection, and the parallel-series connection refers to a combination of series and parallel connections. Batteries can also be referred to battery packs. Optionally, the plurality of battery cells can be first connected in series or in parallel or in parallel-series connection to form a battery module, and then a plurality of battery modules are connected in series or in parallel or in parallel-series connection to form a battery. That is to say, the plurality of battery cells can directly form a battery, or they can form battery modules first, and then the battery modules can form a battery.

FIG. 2 is a schematic structural diagram of a battery 10 according to an embodiment of the present application, where the battery 10 may include a plurality of battery cells 20. The battery 10 may also include a box 11 with a hollow structure inside, and the plurality of battery cells 20 are received in the box 11. As shown in FIG. 2, the box 11 may include two portions referred to herein respectively as a first portion 111 and a second portion 112 which are snapped together. Shapes of the first portion 111 and the second portion 112 may be determined according to combined shapes of the plurality of battery cells 20. The first portion 111 and the second portion 112 may each have an opening. For example, each of the first portion 111 and the second portion 112 may be a hollow cuboid with only one surface being an opening surface, the opening of the first portion 111 and the opening of the second portion 112 are disposed opposite each other, and the first portion 111 and the second portion 112 are snapped with each other to form a box having a closed chamber. The first portion 111 may also be formed in a plate-like structure, and the second portion 112 may be formed as a hollow cuboid with only one opening surface, and the first portion 111 closes the opening surface of the second portion 112 to form a closed box. The plurality of battery cells 20 are combined in parallel or in series or in parallel-series connection with each other and then placed in a box formed by snapping an upper cover 111 and a box shell 112.

As shown in FIG. 2, the plurality of battery cells 20 may form a battery cell matrix arranged in a first direction X and a direction (direction Y) perpendicular to the first direction X. In the first direction X, the plurality of battery cells 20 are aligned side by side, i.e., the plurality of battery cells 20 are aligned flush with each other. In the direction Y, the plurality of battery cells 20 are arranged end-to-end, i.e., two adjacent battery cells 20 face each other in the direction Y In order to prevent the failed battery cells from affecting the other adjacent battery cells 20, for example, when the battery cells 20 are depressurized, high-temperature and high-pressure emissions are directly discharged to the other adjacent battery cells 20, thus a separator is usually arranged between the adjacent battery cells 20. However, when there are no other components between the adjacent battery cells 20 (refer to FIG. 2) or only bus components, it is necessary to control a pressure relief direction of the battery cells 20 so that discharged materials are as far away from the other adjacent battery cells 20 as possible.

The battery 10 may also include other structures, which will not be described here. For example, the battery 10 may also include a bus component for effecting electrical connection between the plurality of battery cells 20 such as in parallel or series or in parallel-series connection. Specifically, the bus component may realize the electrical connection between the battery cells 20 by connecting electrode lead-out portions of the battery cells 20. In addition, a bus component between the electrode lead-out portions may also be omitted, and the electric connection between the battery cells 20 is achieved by direct welding (for example, laser welding) of the electrode lead-out portions. The electrode lead-out portion refers to a component for leading out electric energy from an electrode assembly in a casing, and may refer to an electrode terminal or an end cap or a casing for outputting electric energy from the battery cells 20 hereinafter. The electric energy of the plurality of battery cells 20 can be further led out by a conductive mechanism passing through the box 11. Optionally, the conductive mechanism may also belong to the bus components.

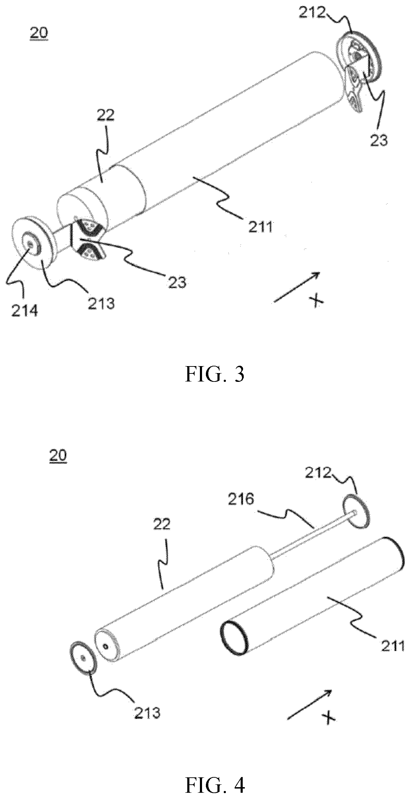

FIG. 3 schematically shows an internal structure of a typical battery cell 20. A casing 211 is provided with openings at two ends in a first direction X. A first end cap 212 and a second end cap 213 respectively close the openings at the two ends of the casing 211 and are both connected with the casing 211. The casing 211 may be connected with the first end cap 212 and the second end cap 213 by welding, or C-shaped connecting portions may also be provided at the two ends of the casing 211 in the first direction X, and the C-shaped connecting portions at the two ends of the casing 211 respectively clamp the first end cap 212 and the second end cap 213, so as to achieve the connection between the casing 211 and the first end cap 212 and the connection between the casing 211 and the second end cap 213. The C-shaped connecting portion may be formed by, for example, rolling edges at the two ends of the casing 211 in the first direction X, forming a lower edge of the C-shaped connecting portion for supporting the end cap, placing the end cap on this supporting surface (the lower edge of the C-shaped connecting portion), and then folding the casing 211 and snapping to the end cap, thereby forming the C-shaped connecting portion for clamping the end cap. The casing 211 and the first end cap 212 and the second end cap 213 constitute an outer shell of the battery cell 20. The casing 211 is filled with an electrolyte such as electrolyte solution. An electrode assembly 22 is received in the casing 211. According to actual use requirements, the electrode assemblies 22 may be provided singly or in plurality. A plurality of electrode assemblies 22 may be combined in a stacked or wound manner. The casing 211 may be formed as a cuboid or a cube or a cylinder according to a combined shape of one or more electrode assemblies 22. In the present application, the casing 211 is illustrated as a cylinder.

The battery cell 20 may also include two electrode terminals 214 (i.e., a positive electrode terminal and a negative electrode terminal), each of which is correspondingly provided with an adapter member 23, or may also be referred to as a current collecting member, which is located between the end caps 212, 213 and the electrode assembly 22 for electrically connecting the electrode assembly 22 and the electrode terminal 214. As the electrode terminal 214 can be electrically connected with the end caps 212 and 213 directly by abutting, welding or thermal conductive adhesion, the adapter member 23 may also be omitted.

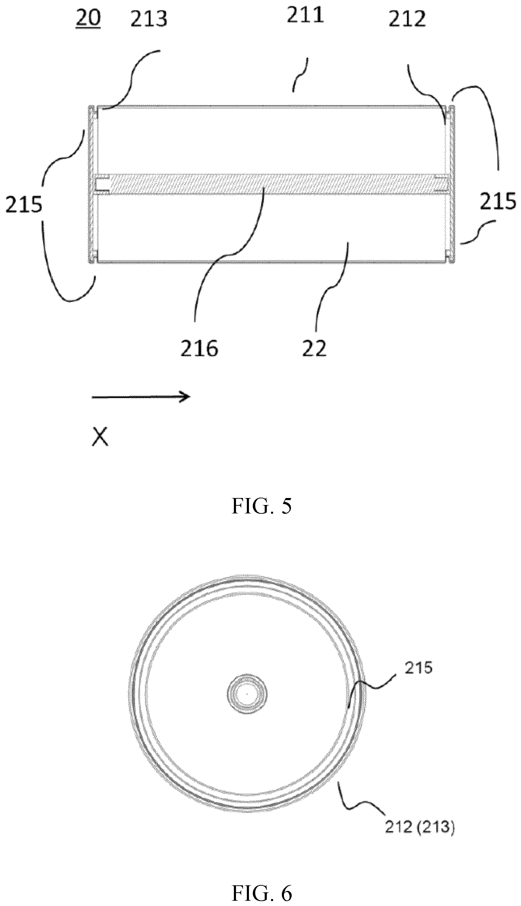

FIG. 4 and FIG. 5 are schematic diagrams of the battery cell according to embodiments of the present application. As shown in FIG. 4, the battery cell 20 according to the embodiment of the present application includes a casing 211 provided with openings at two ends in a first direction X; a first end cap 212 and a second end cap 213 for closing the openings at the two ends of the casing 211, respectively and both connected to the casing 211; a connecting piece 216 provided in the casing 211 for connecting with the first end cap 212 or connecting with the first end cap 212 and the second end cap 213.

The casing 211, the first end cap 212, the second end cap 213 and an electrode assembly 22 in FIGS. 4 and 5 are all of the same configuration as those in FIG. 3 and will not be described here. It needs to be noted that in FIG. 3, positive and negative tabs of the electrode assembly 22 are electrically connected to the electrode terminal 214 through the adapter member 23. In the embodiment of the present application, the positive and negative tabs of the electrode assembly 22 may also be electrically connected to the end caps 212, 213, that is, the first end cap 212 and the second end cap 213 become positive and negative electrodes of the battery cell 20 without additionally providing the electrode terminal 214. The positive and negative tabs of the electrode assembly 22 may be electrically connected to the end caps directly, or the positive and negative tabs of the electrode assembly 22 may also be electrically connected to the end caps through the adapter member 23. When the adapter member 23 is present, the adapter member 23 is provided with a relief hole for relieving the connecting piece 216 to allow the connecting piece 216 to pass through.

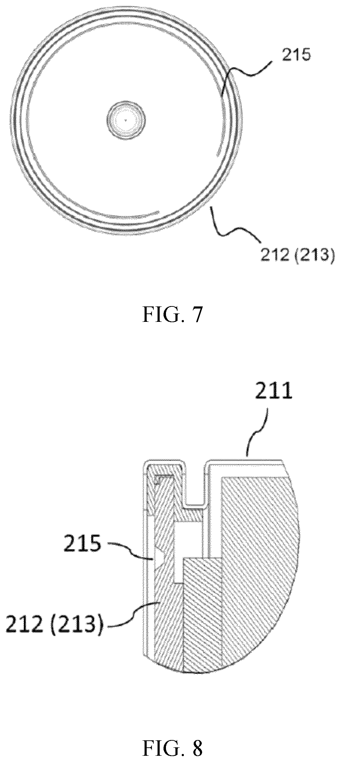

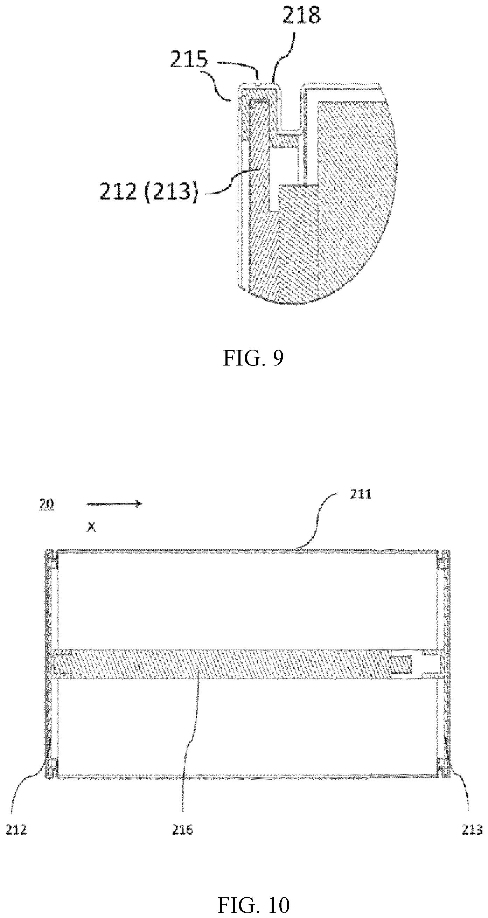

As shown in FIG. 5, the battery cell 20 is provided with weak structures 215 at the two ends in the first direction X. The weak structure 215 may be formed by providing a notch, and a thickness of an outer shell corresponding to the notch is smaller than a thickness of other areas of the outer shell except the notch, that is, the notch (the weak structure 215) is the weakest position on the outer shell of the battery cell 20. When the battery cell 20 generates a large amount of gas so that a pressure inside the casing 211 rises and reaches a threshold, the weak structure 215 may rupture to form a pressure relief channel or opening in the battery cell 20. As shown in FIGS. 6 and 7, in the embodiments of the present application, the weak structure 215 may be a continuous line having a closed shape (refer to FIG. 6) or a near-closed shape (refer to FIG. 7), as long as the weak structure 215 can break when the pressure inside the battery cell 20 reaches the threshold. As shown in FIGS. 8 and 9, in some embodiments, the weak structure 215 may be disposed on the end cap or in a region where the casing 211 is connected to the end cap. As shown in FIG. 8, if the weak structure 215 is provided on the end cap, when the pressure inside the casing 211 rises and reaches the threshold, the pressure inside the battery cell 20 increases, causing the end cap to deform, and the weak structure 215 is more easily damaged than other positions under the action of shear force, thereby tearing to form a pressure relief channel or opening. It needs to be noted that when the end cap is provided with the electrode terminal 214, the weak structure 215 provided on the end cap needs to avoid the electrode terminal 214, so as to prevent the connection between the electrode terminal 214 and the electrode assembly 22 from preventing the weak structure 215 from cracking. If the weak structure 215 is disposed in a connection area between the casing 211 and the end cap (refer to FIG. 9), when the pressure inside the casing 211 rises and reaches the threshold, the end cap deforms and exerts a force on the outer shell, the weak structure 215 is most vulnerable to destruction, so that tearing causes the end cap to disengage from the connection of the casing, forming a pressure relief opening. It can be understood that when the weak structure 215 is disposed on the end cap, and the internal pressure of the battery cell 20 reaches the threshold, after the weak structure 215 is broken, and an area enclosed by the weak structure 215 may be separated from the end cap, or a partial area of the weak structure 215 may be separated from the connection of the end cap.

In addition, when the internal pressure of the battery cell 20 reaches the threshold, since the connecting piece 216 applies a connecting force to the first end cap 212 and/or the second end cap 213, and a connecting position where the connecting piece 216 is connected to the first end cap 212 and/or the second end cap 213 is within the area surrounded by the weak structure 215, the connecting piece 216 can prevent the end caps and the portions surrounded by the weak structures on the end caps from being deformed. Also, since the connecting force applied by the connecting piece 216 to the first end cap 212 is greater than the connecting force applied to the second end cap 213, the weak structure 215 on a side with a smaller connecting force of the second end cap 213 is more likely to crack and form a pressure relief opening or channel. Thus, the control of a pressure relief direction can be achieved without distinguishing the configurations of the end caps 212 and 213, thereby improving the production efficiency and saving the manufacturing cost. Certainly, the connecting piece 216 may be connected to both the first end cap 212 and the second end cap 213, and the connecting force of the connecting piece 216 to the first end cap 212 is greater than the connecting force to the second end cap 213. The connecting piece may also be connected to the first end cap 212 but not to the second end cap 213. In this case, the connecting force between the connecting piece 216 and the second end cap 213 is zero, so that the connecting force between the connecting piece 216 and the first end cap 212 is greater than the connecting force between the connecting piece 216 and the second end cap 213.

Optionally, a connection mode between the connecting piece 216 and the first end cap 212 is different from a connection mode between the connecting piece 216 and the second end cap 213. Optionally, the connecting piece 216 is in threaded connection or bonded or snap-fitted with the first end cap 212, and the connecting piece 216 is in interference fit with the second end cap 213. Thus, the connecting force between the connecting piece 216 and the first end cap 212 is different from the connecting force between the connecting piece 216 and the second end cap 213 by providing different connecting modes. Also, since the connecting piece 216 is fixedly connected to both the first end cap 212 and the second end cap 213, displacement of the connecting piece 216 in the first direction X can be suppressed.

As shown in FIG. 10 (only the threaded connection is shown in the figure), a length of the connecting piece 216 is less than a minimum distance between the first end cap 212 and the second end cap 213, so that the connecting piece 216 is not connected or in contact the second end cap 213. Thus, the connecting force between the connecting piece 216 and the first end cap 212 is larger than the connecting force (zero) between the connecting piece 216 and the second end cap 213 without distinguishing the configurations of two ends of the connecting piece 216, thereby achieving the purpose of controlling the pressure relief direction, thereby further improving the production efficiency and reducing the production and manufacturing cost. In addition, assembly errors can be avoided structurally.

Optionally, according to the embodiment of the present application, at least part of the connecting piece 216 is received in the electrode assembly 22 within the casing 211, the connecting piece 216 extends out of the electrode assembly 22 in the first direction X toward the first end cap 212 to connect with the first end cap 212.

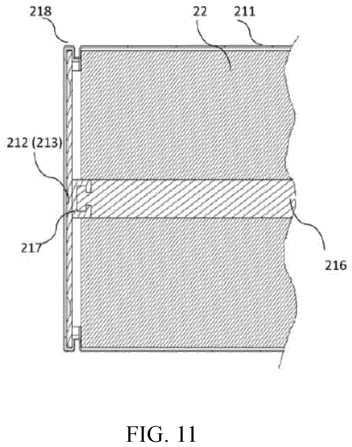

Optionally, the connecting piece 216 is received in the electrode assembly 22. A surface, facing the connecting piece 216, of the first end cap 212 is formed with a receiving portion 217 for receiving at least a part of the connecting piece 216 extending out of the electrode assembly 22. The receiving portion 217 may be integrally molded with the first end cap 212 or may be separately molded with the first end cap 212 and then connected to the first end cap 212 by a process such as welding. The receiving portion 217 is provided with threads or slots inside (refer to FIGS. 5 and 11) for threaded connection or snapping with the part of the connecting piece 216 extending out of the electrode assembly 22. Therefore, the connecting piece provides the connecting force to the first end cap 212 by means of screw connection, snap-fitting and the like.

Optionally, according to the embodiments of the present application, the structure of the first end cap 212 is the same as that of the second end cap 213. Therefore, the purpose of not distinguishing incoming materials of the end caps is achieved.

Optionally, a part of the connecting piece 216, being in contact with the first end cap 212 and/or the second end cap 213, is made of an insulating material. The connecting piece 216 may be insulated at least at a part connected to the first end cap 212 and/or the second end cap 213 by using an insulating material (e.g., ceramic or plastic) or surface coating of an insulating varnish, etc., to prevent the connecting piece 216 from causing a short circuit of positive and negative electrodes of the battery cell 20. It needs to be understood that the entire connecting piece 216 may also be provided to be insulated. In addition, the connecting piece 216 may also be made of a combination of two materials. For example, a connecting portion with the end caps 212 and/or 213 is plastic, and a remaining part is metal, which not only meets the insulation requirements, but also improves the strength of the connecting piece 216 and prevents the connecting piece 216 from being overstressed to be damaged when it is located in the electrode assembly 22.

Optionally, a receiving hole is formed in a center of the electrode assembly 22, and the connecting piece 216 is disposed in the receiving hole. Optionally, the connecting piece 216 is fixedly connected to the electrode assembly 22 to limit displacement of the connecting piece 216 in the first direction. For example, the connecting piece 216 may be bonded or welded to the electrode assembly 22. The connecting piece 216 may also be interference fitted with the electrode assembly 22. Thereby, the connecting piece 216 may provide a connecting force to the first end cap 212 and/or the second end cap 213 through a fixed connection with the electrode assembly 22.

Optionally, the connecting piece 216 may also be fixedly connected to the casing 211 to limit displacement of the connecting piece 216 in the first direction.

Optionally, the weak structure 215 is provided at the first end cap 212 and the second end cap 213 (refer to FIG. 8), or at a connecting portion where the casing 211 is connected with the first end cap 212 and a connecting portion where the casing 211 is connected with the second end cap 213 (refer to FIG. 9). Optionally, when the weak structure 215 is provided at the connecting portion where the casing 211 is connected with the first end cap 212 and the connecting portion where the casing 211 is connected with the second end cap 213, the connecting portions 218 are C-shaped and are provided at the two ends of the casing 211 in the first direction X, and the C-shaped connecting portions 218 at the two ends of the casing 211 clamp the first end cap 212 and the second end cap 213, respectively. In contrast to the solution in which the weak structure 215 is provided in the first end cap 212 and the second end cap 213, in the scheme in which the weak structure 215 is provided in the connecting portion 218, when the weak structure 215 is broken, the connection between the casing 211 and the second end cap 213 is broken, and the entire second end cap 213 is separated from the casing 211 to form a pressure-relievable channel or opening, thereby the pressure-relievable channel or opening has a larger area, allowing for more rapid pressure relief.

Some embodiments of the present application also provide a battery 10 which may include a plurality of battery cells 20 of the previous embodiments.

Some embodiments of the present application also provide an electrical device which may include the battery 10 of the previous embodiments. Optionally, the electrical device may be a vehicle 1, a ship or a spacecraft.

The battery cell, battery, and electrical device in the embodiments of the present application have been described above, and methods and devices for preparing battery cells of embodiments of the present application will be described below, where portions not described in detail can be referred to the preceding embodiments.

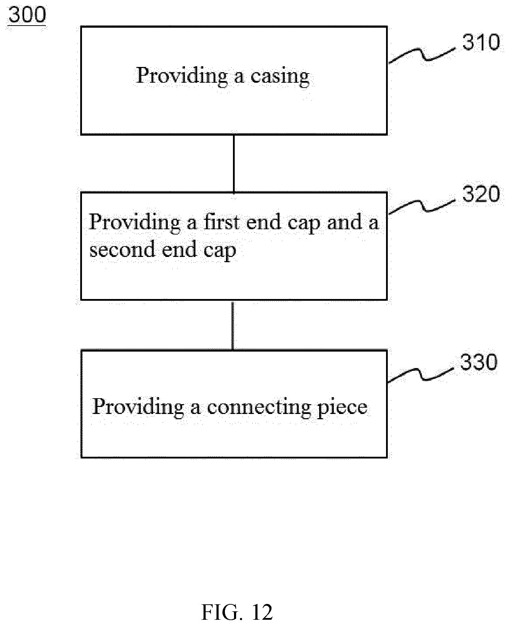

FIG. 12 shows a schematic flowchart of a method for preparing a battery cell according to some embodiments of the present application. As shown in FIG. 10, a method 300 includes:
310, providing a casing 211 provided with openings at two ends in a first direction;
320, providing a first end cap 212 and a second end cap 213 for closing the openings at the two ends of the casing 211, respectively, and both connected to the casing 211; and
330, providing a connecting piece 22 disposed in the casing 211 for connecting the first end cap 212 or for connecting the first end cap 212 and the second end cap 213,
wherein the battery cell 20 is provided with weak structures 215 at the two ends in the first direction, a connecting force between the connecting piece 22 and the first end cap 212 is greater than a connecting force between the connecting piece 216 and the second end cap 213, and a connecting position where the connecting piece 216 is connected to the first end cap 212 is located in an area surrounded by the weak structures 215.

Finally, it needs to be noted that, the above embodiments are only used to illustrate the technical solution of the present application and not to limit it. Although the present application has been described in detail with reference to the foregoing embodiments, it needs to be understood by those of ordinary skill in the art that the technical solution described in the foregoing embodiments can still be modified or some of the technical features thereof can be equivalently replaced. However, these modifications or substitutions do not depart the essence of the corresponding technical solution from the spirit and scope of the technical solution of each embodiment of the present invention.

## Claims

1. A battery cell (20) comprising:
a casing (211) provided with openings at two ends in a first direction (X);
a first end cap (212) and a second end cap (213) for closing the openings at the two ends of the casing (211), respectively and connected with the casing (211); and
a connecting piece (216) disposed in the casing (211) for connecting the first end cap (212) or for connecting the first end cap (212) and the second end cap (213),
wherein the battery cell (20) is provided with weak structures (215) at the two ends in the first direction (X), a connecting force between the connecting piece (216) and the first end cap (212) is greater than a connecting force between the connecting piece (216) and the second end cap (213), and a connecting position where the connecting piece (216) is connected to the first end cap (212) is located in an area surrounded by the weak structures (215).

2. The battery cell according to claim 1, wherein a connection mode of the connecting piece (216) to the first end cap (212) is different from a connection mode of the connecting piece (216) to the second end cap (213).

3. The battery cell according to claim 2, wherein the connecting piece (216) is in threaded connection or bonded or snap-fitted with the first end cap (212), and the connecting piece (216) is in interference fit with the second end cap (213).

4. The battery cell according to claim 1, wherein the connecting piece (216) is connected with the first end cap (212), and the connecting piece (216) is not connected with the second end cap (213).

5. The battery cell according to claim 4, wherein a length of the connecting piece (216) is less than a minimum distance between the first end cap (212) and the second end cap (213), so that the connecting piece (216) is not connected or in contact with the second end cap (213).

6. The battery cell according to any one of claims 1 to 5, wherein the battery cell further comprises an electrode assembly (22) received in the casing, at least part of the connecting piece (216) received in the electrode assembly (22), the connecting piece (216) extending out of the electrode assembly (22) in the first direction (X) toward the first end cap (212) to connect with the first end cap (212).

7. The battery cell according to claim 6, wherein a surface, facing the connecting piece (216), of the first end cap (212) is formed with a receiving portion (217) for receiving at least a part of the connecting piece (216) extending out of the electrode assembly (22), and the receiving portion (217) being in threaded connection or snap-fitted with the part of the connecting piece (216) extending out of the electrode assembly (22).

8. The battery cell according to any one of claims 1 to 7, wherein a structure of the first end cap (212) is the same as a structure of the second end cap (213).

9. The battery cell according to claim 1, wherein a portion of the connecting piece (216) in contact with the first end cap (212) and/or the second end cap (213) is made of an insulating material.

10. The battery cell according to any one of claims 1 to 9, wherein the battery cell further comprises an electrode assembly (22) received in the casing, a receiving hole is formed in a center of the electrode assembly (22), and the connecting piece (216) is disposed in the receiving hole.

11. The battery cell according to any one of claims 1 to 10, wherein the battery cell further comprises an electrode assembly (22) received in the casing, and the connecting piece (216) is fixedly connected with the electrode assembly (22) to limit displacement of the connecting piece (216) in the first direction (X).

12. The battery cell according to claim 11, wherein the connecting piece (216) is in interference fit with the electrode assembly (22).

13. The battery cell according to any one of claims 1 to 12, wherein the weak structures (215) are provided at the first end cap (212) and the second end cap (213), or at a connecting portion where the casing (211) is connected to the first end cap (212) and a connecting portion where the casing (211) is connected to the second end cap (213).

14. The battery according to claim 13, wherein when the weak structures (215) are provided at the connecting portion where the casing (211) is connected to the first end cap (212) and the connecting portion where the casing (211) is connected to the second end cap (213), the connecting portions are C-shape and are arranged at the two ends of the casing (211) in the first direction (X), and the C-shaped connecting portions at the two ends of the casing (211) clamp the first end cap (212) and the second end cap (213), respectively.

15. A battery (1) comprising a plurality of battery cells (20) according to any one of claims 1 to 14.

16. A device comprising the battery (1) according to claim 15, for providing electrical energy.

17. A method of preparing a battery cell comprising:
providing a casing provided with openings at two ends in a first direction;
providing a first end cap and a second end cap for closing the openings at the two ends of the casing, respectively and both connected with the casing; and
providing a connecting piece disposed in the casing, for connecting the first end cap or for connecting the first end cap and the second end cap,
wherein the battery cell is provided with weak structures at the two ends in the first direction, a connecting force between the connecting piece and the first end cap is greater than a connecting force between the connecting piece and the second end cap, and a connecting position where the connecting piece is connected to the first end cap is located in an area surrounded by the weak structures.
